# EUROPÄISCHE PATENTSCHRIFT

(11) **EP 1 272 082 B1**
(45) Veröffentlichungstag und Bekanntmachung des Hinweises auf die Patenterteilung: **25.04.2007**
(21) Anmeldenummer: 01907565.4
(22) Anmeldetag: 26.02.2001
(51) Int. Cl.: A47J 43/08

(54) **KÜCHENMASCHINE**
KITCHEN MACHINE
ROBOT DE CUISINE

(30) Priorität: 31.03.2000 DE 10016331
(43) Veröffentlichungstag der Anmeldung: 08.01.2003
(73) Patentinhaber: BSH Bosch und Siemens Hausgeräte GmbH, 81739 München (DE)
(72) Erfinder: ZIBRET, Igor, 3327 Smartno ob Paki (SI); BREZOVNIK, Peter, 3330 Mozirje (SI); PAVLOVIC, Henrik, 3333 Ljubno (SI); PESEC, Jurij, 3301 Petrovce (SI)
(86) Internationale Anmeldenummer: PCT/EP2001/002178
(87) Internationale Veröffentlichungsnummer: WO 2001/074222

(56) Entgegenhaltungen:
- EP-A- 0 052 697
- EP-A- 0 157 128
- DE-A- 3 045 088
- DE-A- 3 433 164
- DE-A- 3 545 226

## Beschreibung

Die Erfindung betrifft eine Küchenmaschine, mit einem Gehäuse, in welchem ein Antriebsaggregat angeordnet ist, das mit einer ersten und zweiten Abtriebswelle gekoppelt ist, die durch Zwischenschaltung eines Getriebes mit unterschiedlichen Drehzahlen angetrieben sind, wobei jede Abtriebswelle mit mindestens einer Ankoppelstelle für ein Werkzeug versehen ist, die jeweils an ihrem Außenumfang mit einer Gerad- oder Schrägverzahnung versehen und sequentiell nacheinander angeordnet sind.

Bei einer auf dem Markt befindlichen Küchenmaschine sind zwei koaxial zueinander angeordnete Abtriebswellen vorgesehen, wobei die eine Abtriebswelle mit einer relativ hohen Drehzahl (ca. 2000 U/min) und die andere durch Zwischenschaltung eines Getriebes mit einer wesentlich niedrigeren Drehzahl (ca. 400 U/min) angetrieben wird. Mit den Abtriebswellen können dann je nach Art der durchzuführenden Arbeiten entsprechende Werkzeuge gekoppelt werden. Da mit einer Küchenmaschine auch Arbeiten durchgeführt werden müssen, die ein hohes Drehmoment erfordern, müssen die Ankoppelstellen zur Übertragung dieser hohen Drehmomente entsprechend ausgebildet sein. Daher sind diese Ankoppelstellen in der Regel mit einer Schräg- oder Geradverzahnung versehen oder weisen an ihrem Umfang mehrere entsprechend stark dimensionierte Rippen auf, mit denen sie in in einer Aufstecköffnung der Werkzeuge ausgebildete Nutvertiefungen eingreifen. Somit besitzen die Ankoppelstellen eine konstruktiv aufwendige Form. Will man mit der einen oder anderen Abtriebswelle Werkzeuge für Arbeitsgänge koppeln, die wesentlich geringere Drehmomente erfordern, dann muß die Aufstecköffnung dieser Werkzeuge ebenfalls an die entsprechende Kontur der Ankoppelstelle angepaßt werden. Von der Drehmomentanforderung wären dagegen wesentlich einfachere Ankoppelungen möglich.

Aus der DE-A-34 33 164 welche eine Grundlage für den Oberbegriff des unabhängigen Anspruchs 1 bildet, ist eine Mehrzweck-Küchenmaschine bekannt, deren Motorwelle eine erste Kupplungshülse trägt, die an ihrem Außenumfang eine Zahnrad-Verzahnung aufweist. Die Motorwelle ist außerdem über ein Planetengetriebe mit einer Hohlwelle gekoppelt, die ihrerseits an ihrem oberen Endabschnitt eine weitere Kupplungshülse trägt, die an ihrer Außenseite schraubenlinienförmig verlaufende Kupplungsnuten aufweist.

Der Erfindung liegt die Aufgabe zugrunde, eine Küchenmaschine der eingangs beschriebenen Art mit einfachen konstruktiven Maßnahmen zu verbessern.

Die Lösung der gestellten Aufgabe gelingt nach der Erfindung dadurch, daß eine der Abtriebswellen mit wenigstens einer niveaumäßig von deren einen Ankoppelstelle beabstandeten weiteren Ankoppelstelle für weitere Werkzeuge versehen ist, die eine glatte Außenfläche und eine von der Kreisform abweichende Querschnittsform besitzt.

Die niveaumäßig von der regulären Ankoppelstelle abgesetzte zusätzliche Ankoppelstelle kann somit für die zu übertragenden geringeren Drehmomente entsprechend ausgebildet werden. Hierbei kann eine formell oder kraftschlüssige Verbindung zwischen Ankoppelstelle und Werkzeug vorgesehen werden. Wegen der Einfachheit der Ankoppelstelle kann jedes Werkzeug mit einer solchen Ankoppelstelle versehen werden, so daß jedes Werkzeug direkt mit der Abtriebswelle gekoppelt werden kann und damit entsprechende Zwischenträger entfallen. Die führt nicht mehr zu einer Verminderung der Teileanzahl, sondern zugleich auch noch zu einem deutlich verbesserter Bedienkomfort der Küchenmaschine bei der Bestückung mit Werkzeugen. Diese Ankoppelstelle eignet sich besonders für ein ein geringeres Antriebsmoment benötigendes Werkzeug, das durch die Vorlagerung oder Ankoppelstelle durch deren Ausbildung als Steckteil leicht ankoppelbar ist.

Eine konstruktiv besonders einfache Verbindung zwischen Abtriebswelle und Werkzeug ist dadurch möglich, daß die weitere Ankoppelstelle eine Querschnittsform aufweist, durch die eine auf Formschluß beruhende Mitnahmeverbindung für das Werkzeug gegeben ist.

Eine geometrisch besonders einfache Form der formschlüssigen Verbindung wird dadurch erreicht, daß die weitere Ankoppelstelle eine von der Kreisform abweichende Umfangskontur mit glatter oder glatten Flächen aufweist. Derartige eine glatte Umfangskontur aufweisende Ankoppelstellen lassen sich einfach herstellen.

Anhand eines in der Zeichnung dargestellten Ausführungsbeispieles wird die Erfindung nachfolgend noch näher erläutert. Es zeigen:

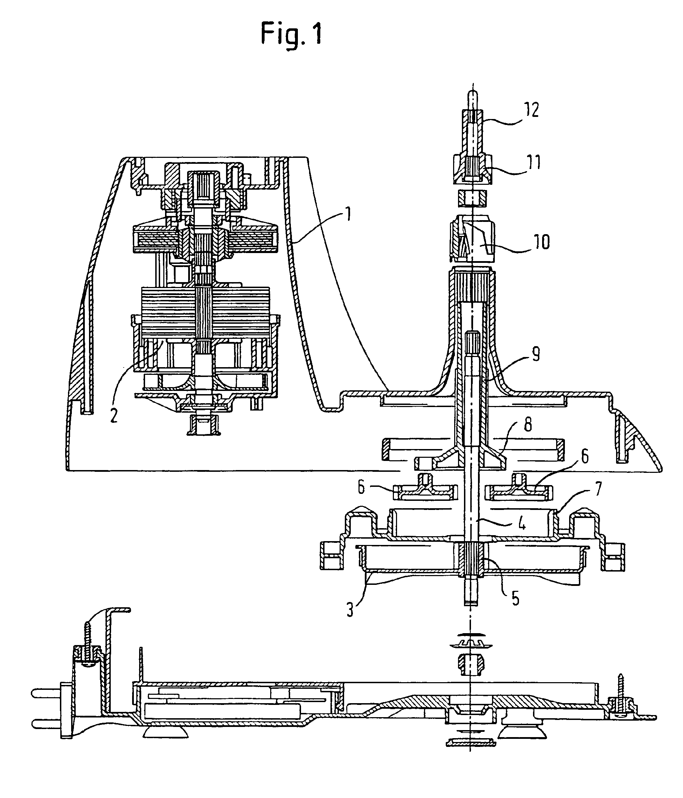

- Fig. 1: eine Küchenmaschine in explodierter Darstellung
- Fig. 2 und 3: verschiedene Ausbildungsformen der Ankoppelstellen der einen Abtriebswelle.

Im Gehäuse 1 einer Küchenmaschine ist ein Antriebsmotor 2 eingebaut, der über einen nicht dargestellten Zahnriemen ein Getrieberad 3 antreibt. Mit dem Getrieberad 3 ist eine erste Abtriebswelle 4 drehfest verbunden. Diese erste Abtriebswelle 4 wird somit mit einer relativ hohen Drehzahl angetrieben. Durch ein mit dem Getrieberad 3 verbundenes Sonnenrad 5 wird ein aus den Planetenrädern 6 und einem feststehenden Zahnkranz 7 bestehendes Planetengetriebe angetrieben. Der mit den Planetenrädern 6 verbundene Planetenträger 8 geht in eine Hohlwelle 9 über, welche eine zweite Abtriebswelle darstellt und an ihrem freien Ende mit einer Ankoppelstelle 10 für ein eine niedrigere Drehzahl erforderndes Werkzeug versehen ist. Die erste Abtriebswelle 4 ist koaxial durch die Hohlwelle 9 hindurchgeführt und trägt an ihrem freien Ende eine ebenfalls drehfest mit ihr verbundene Ankoppelstelle 11 für ein eine höhere Drehzahl erforderndes Werkzeug.

Niveaumäßig von der Ankoppelstelle 11 der ersten Abtriebswelle 4 beabstandet, ist eine weitere Ankoppelstelle 12 vorgesehen, die materialmäßig einheitlich mit der Ankoppelstelle 11 ausgebildet sein kann. Da über die Ankoppelstellen 10 und 11 der ersten und zweiten Abtriebswelle 4 und 9 hohe Drehmomente übertragen werden müssen, sind diese Ankoppelstellen 10 und 11 an ihrem Außenumfang mit einer Gerad- oder Schrägverzahnung versehen. Die an diesen Ankoppelstellen 10 und 11 aufsteckbaren Werkzeuge weisen daher in ihrer Aufstecköffnung eine mit der Verzahnung der Ankoppelstellen 10 und 11 zusammenpassende Nutung auf.

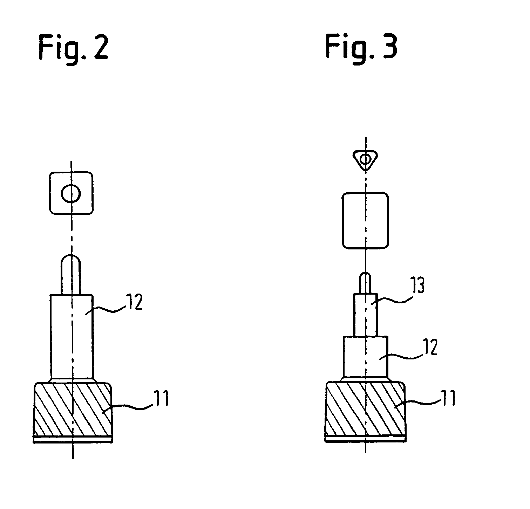

Der Ankoppelstelle 12 kann wiederum nochmals niveaumäßig gegenüber der Ankoppelstelle 12 abgesetzte weitere Ankoppelstelle 13 (siehe Fig, 3) vorgelagert sein. Die Ankoppelstellen 12 und 13 weisen eine von der Kreisform abweichende Querschnittsform, z. B. Quadrat-, Rechteck-, Dreieck- oder sonstige Vieleckform bzw. auch eine ovale Form auf. In der Fig. 2 und 3 sind über den dargestellten Ankoppelstellen 12 und 13 deren entsprechende Querschittsformen eingezeichnet. Dies sind Querschnittsformen die eine glatte Außenfläche besitzen und daher leicht herzustellen sind. Dementsprechend einfach ist auch die Querschnittsform der Aufstecköffnung der Werkzeuge. Mittels dieser Formen ist eine drehfeste, den Drehmomentanforderungen der betreffenden Werkzeuge entsprechende Koppelung dieser Werkzeuge mit der Abtriebswelle 4 möglich.

## Patentansprüche

1. Küchenmaschine, mit einem Gehäuse (1), in welchem ein Antriebsaggregat (2) angeordnet ist, das mit einer ersten und zweiten Abtriebswelle (4; 9) gekoppelt ist, die durch Zwischenschaltung eines Getriebes (5; 6; 7) mit unterschiedlichen Drehzahlen angetrieben sind, wobei jede Abtriebswelle (4 bzw. 9) mit mindestens einer Ankoppelstelle (10 ; 11) für ein Werkzeug versehen ist, die jeweils an ihrem Außenumfang mit einer Gerad- oder Schrägverzahnung versehen und sequentiell nacheinander angeordnet sind, **dadurch gekennzeichnet, daß** eine der Abtriebswellen (4) mit wenigstens einer niveaumäßig von deren einen Ankoppelstelle (11) beabstandeten weiteren Ankoppelstelle (12) für weitere Werkzeuge versehen ist, die eine glatte Außenfläche und eine von der Kreisform abweichende Querschnittsform besitzt.

2. Küchenmaschine nach Anspruch 1, **dadurch gekennzeichnet, daß** an der A b-triebswelle (4) niveaumäßig gegenüber der Ankoppelstelle (12) abgesetzt eine weitere Ankoppelstelle (13) vorgelagert ist.

3. Küchenmaschine nach Anspruch 1 oder 2, **dadurch gekennzeichnet, daß** die Querschnittsform Quadrat-, Rechteck-, Dreieck- oder Vieleckform aufweist.

## Claims

1. Food processor, comprising a housing (1) in which a drive unit (2) coupled with a first and second driven shaft (4; 9) is arranged, the drive unit being driven at different rotational speeds by interposition of a transmission (5; 6; 7), wherein each driven shaft (4 and 9) is provided with at least one coupling point (10; 11) for a tool, the coupling points being each provided at the outer circumference thereof with a straight or inclined toothing and being arranged one after the other in sequence, **characterised in that** one of the driven shafts (4) is provided with at least one further coupling point (12), which is spaced in level from the one coupling point (11) thereof and which has a smooth outer surface and a cross-sectional shape departing from the circular shape, for further tools.

2. Food processor according to claim 1, **characterised in that** the further coupling point (13) is disposed upstream at the driven shaft (4) to be offset in level relative to the coupling point (12).

3. Food processor according to claim 1 or 2, **characterised in that** the cross-sectional shape has square, rectangular, triangular or polygonal shape.

## Revendications

1. Robot de cuisine comprenant un boîtier (1) dans lequel est situé un agrégat d'entraînement (2) couplé à un premier et un second arbres de sortie (4; 9) qui sont entraînés à des vitesses de rotation différentes grâce à un engrenage (5; 6; 7) intercalé, chaque arbre de sortie (4 resp. 9) étant pourvu d'au moins un point d'accouplement (10; 11) pour un outil, lesquels points d'accouplement sont pourvus à chaque fois d'une denture droite ou hélicoïdale au niveau de leur circonférence extérieure et sont disposées l'un après l'autre en série, **caractérisé en ce que** l'un des arbres de sortie (4) est pourvu d'au moins un autre point d'accouplement (12) pour d'autres outils qui présente un écart de niveau par rapport à son point d'accouplement (11) et possède une surface extérieure lisse et une section transversale dont la forme diffère de la forme circulaire.

2. Robot de cuisine selon la revendication 1, **caractérisé en ce qu'**un autre point d'accouplement (13), dont le niveau est en retrait par rapport au point d'accouplement (12), est situé en avant sur l'arbre de sortie (4).

3. Robot de cuisine selon la revendication 1 ou 2, **caractérisé en ce que** la section transversale a une forme carrée, rectangulaire, triangulaire ou polygonale.
